# EUROPEAN PATENT SPECIFICATION

(11) **EP 1 146 761 B1**
(45) Date of publication and mention of the grant of the patent: **19.06.2013**
(21) Application number: 00963002.1
(22) Date of filing: 29.09.2000
(51) Int. Cl.: H04W 48/16

(54) **CHANNEL IDENTIFIER ALLOCATION METHOD AND MOBILE COMMUNICATIONS SYSTEM**
KANALIDENTIFIZIERUNGS ZUWEISUNGSVERFAHREN UND MOBILES KOMMUNIKATIONSSYSTEM
PROCEDE D'AFFECTATION D'IDENTIFICATEUR DE CANAL ET SYSTEME DE COMMUNICATION MOBILE

(30) Priority: 21.10.1999 JP 30022699
(43) Date of publication of application: 17.10.2001
(60) Divisional application: 06027077.4
(73) Proprietor: NTT DOCOMO, INC., Chiyoda-ku Tokyo 100-6150 (JP)
(72) Inventor: IWAMURA, Mikio, Zushi-shi, Kanagawa 249-0008 (JP); ISHIKAWA, Yoshihiro, Yokosuka-shi, Kanagawa 239-0841 (JP)
(74) Representative: HOFFMANN EITLE
(86) International application number: PCT/JP2000/006797
(87) International publication number: WO 2001/030100

(56) References cited:
- JP-A- 7 193 857
- JP-A- 11 098 550
- US-A- 5 353 332
- US-A- 5 570 467
- US-A- 5 722 043
- HAN-SUP LEE ET AL: "Cell search scheme using I/Q multiplexed code assignment in asynchronous W-CDMA system" VEHICULAR TECHNOLOGY CONFERENCE, 1999 IEEE 49TH HOUSTON, TX, USA 16-20 MAY 1999, PISCATAWAY, NJ, USA,IEEE, US, vol. 2, 16 May 1999 (1999-05-16), pages 1560-1564, XP010342174 ISBN: 0-7803-5565-2
- K. HIGUCHI, M. SAWAHASHI AND F. ADACHI: 'Fast cell search algorithm in inter-cell asynchronous DS-CDMA mobile radio' IEICE TRANSACTIONS ON COMMUNICATIONS vol. E81-B, no. 7, July 1998, XP002935412

## Description

### TECHNICAL FIELD

The present invention relates to a channel identifier assigning method in a mobile communications system, and to a mobile communications system, a mobile station and a base station.

### BACKGROUND ART

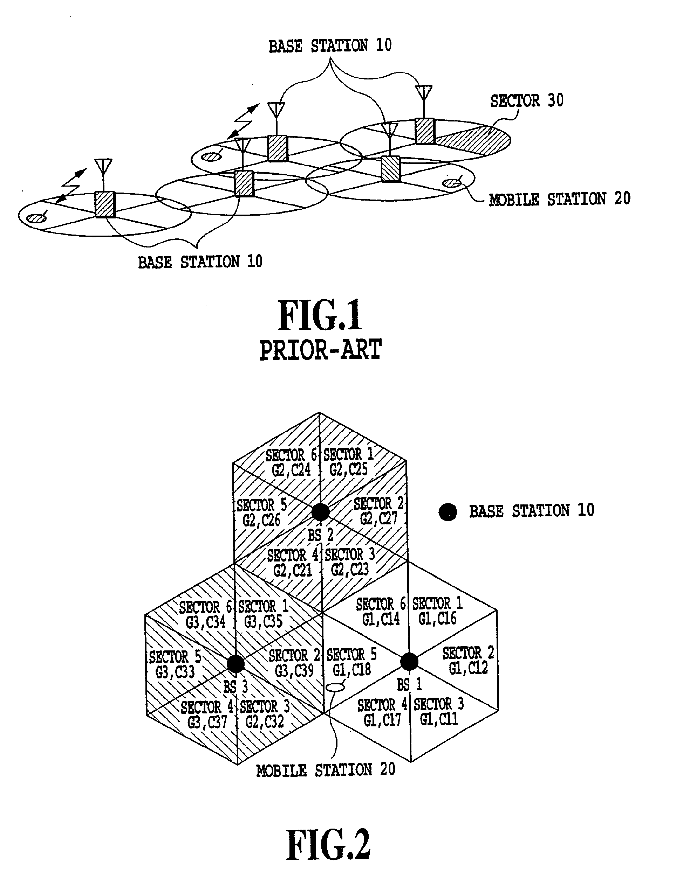

A mobile communications system based on a conventional technique will be described with reference to a schematic diagram of Fig. 1 showing a concept of cells and sectors in the conventional technique.

In radio communications, radio waves radiated from a transmitting end travel through a space with some attenuation, and arrive at a receiving end. Since their propagation loss increases with a distance between the transmitting and receiving ends, a farther distance will require greater transmission power to achieve a desired receiving quality, thereby increasing power consumption. It is important to reduce power consumption for the life of a battery, and for cost effectiveness of the system. In view of this, in a mobile communications system such as a widespread mobile telephone system, its service area is divided into rather small radio zones (ellipses shown in Fig. 1) called cells by installing a plurality of base stations in the service area, so that a mobile station 20 can communicate with a closest base station 10 to reduce the distance between the transmitting and receiving ends, thereby saving its power. In addition, effective reduction in the propagation loss is achieved without increasing the number of the base stations by taking such measures as installing multiple directional antennas at each base station 10, or by dividing each cell into a plurality of sectors 30 (sectors in Fig. 1). In this case, it is important for each mobile station 20 to select best sectors 30 as waiting and communicating sectors 30.

The attenuation amount of actual radio wave propagation is affected not only by the distance, but also by geography or ground objects, thus fluctuating greatly depending on the location. Accordingly, as the mobile station 20 moves, the best sectors 30 change every moment. Thus, the mobile station 20 must supervise radio wave propagation conditions by searching and capturing neighboring sectors so that it can always select the best sectors 30 in such an environment. The search operation of the mobile station 20 is referred to as neighboring cell search. It is important for the mobile station 20 to supervise the propagation conditions of as many sectors 30 as possible to always select the optimum sectors 30.

The neighboring cell search is carried out by the mobile station 20 by searching and receiving perch channels transmitted from the sectors 30. In this case, it is necessary for the perch channels of the sectors 30 to have identifiers so that the mobile station 20 can identify the sectors 30 that send the perch channels. The identifier is referred to as "channel identifier" in this specification. A plurality of channel identifiers are prepared and assigned to the sectors 30 so that the sectors 30 can transmit the perch channels marked by the channel identifiers. The channel identifiers can consist of carrier frequencies in a TDMA/FDMA system or spreading codes in a CDMA system, which have an affinity for the systems, for example. The mobile station 20 searches for receivable perch channels in its neighboring cell search, and when detecting a new perch channel, it identifies the channel identifier of the perch channel. As a result, the mobile station 20 can identify the sectors 30 so that it decides the waiting or communicating sectors 30 from the quality of the received perch channels.

Here, if considerably near sectors 30 reuse the same channel identifier, a problem can arise of interaction such as erroneous identification or detection of the sectors 30. As long as the sectors 30 which are assigned the same channel identifier are distant enough, the interaction can be suppressed to a negligible level, presenting no problem. Therefore, it is necessary for the system, which has to reassign the same channel identifier to a plurality of sectors 30 because the total number of channel identifiers is less than the number of the sectors in the system, to pay enough attention to reused intervals of the channel identifiers. Although a large number of the channel identifiers can make the reassignment easier, an increasing number of the channel identifiers will increase the number of candidates for deciding the channel identifier in the neighboring cell search, which in turn increases the duration of the neighboring cell search. Accordingly, from the viewpoint of accelerating the neighboring cell search, a smaller number of channel identifiers is preferable.

To achieve fast neighboring cell search when there are a lot of channel identifiers, they can be grouped in advance. To achieve fast neighboring cell search for a large number of channel identifiers, that is, spreading codes, in a CDMA mobile communications system, a method called "3-step cell search" is applicable which is disclosed in a document by K. Higuchi, M. Sawahashi and F. Adachi, "Fast Cell Search Algorithm In Inter-Cell Asynchronous DS-CDMA Mobile Radio", IEICE Trans. Commun., Vol. E81-B, No. 7, July 1998. According to the technique, the channel identifiers are grouped in advance so that the mobile station can carry out the neighboring cell search by detecting the timing of a perch channel, followed by identifying the group of the channel identifier. Then, at last, the channel identifier is identified in the group. This technique can accelerate the identification of the sector. The fast neighboring cell search is important in terms of two points: it enables the mobile station to adapt to the propagation conditions fluctuating every moment with its movement; and to save the power consumed in the search. In the FDMA/TDMA, if the carrier frequencies are grouped in advance, the number of frequencies to be swept in the neighboring cell search is limited, making it possible to accelerate the neighboring cell search.

A faster neighboring cell search can be implemented by reducing the number of candidates for the channel identifier decision. For example, a sector notifies the mobile station of information about its neighboring sectors, and the mobile station can carry out the neighboring cell search according to the information, reducing the number of the candidates. The mobile station can receive the information about the neighboring sectors from the communicating sector or captured sectors. In this case, a large amount of information will increase not only the transmission power, but also the power for the mobile station to decode the information, which is inefficient. Thus, it is important to increase the accuracy of the neighboring cell search using as small an amount of information as possible.

In such a mobile communications system, an increase in the number of channel identifiers to meet the requirement for the channel identifier reassignment will increase the number of candidates for channel identifiers in the neighboring cell search. This presents a problem of prolonging the neighboring cell search.

The prolonged neighboring cell search causes a problem of increasing the power consumption in the search. In addition, it presents an important problem of making it impossible to handle the fast fluctuating propagation conditions and to select the best sectors.

Furthermore, the failure of selecting the best sectors brings about an increase in the transmission power, which presents a problem of increasing the interference to other users, and the power consumption.

Moreover, the mobile station has a problem of consuming much power and being inefficient in the cell search in the conventional technique, because when the mobile station receives from the visiting sector the information about the channel identifiers used by its neighboring sectors to carry out the cell search according to the information, the sector notifies the mobile station of all the channel identifiers of the neighboring sectors in the conventional technique.

In addition, to reassign the same channel identifier to a plurality of sectors, attention must be paid to the reuse intervals of each channel identifier, offering a problem of complicating the design and management of the system.

In addition to the above, Han-Sup Lee et al. (in: "Cell Search Scheme Using I/Q Multiplexed Code Assignment In Asynchronous W-CDMA System", IEEE, 16-05-1999) disclose a cell search scheme that uses the pilot channel of the I/Q multiplexed code assignment.

Further, US 5,353,332 discloses a radiotelephone system, in which the control channel can be configured to broadcast absolute information about its cell and relative information about other cells.

### DISCLOSURE OF THE INVENTION

Therefore, an object of the present invention is to provide a mobile communications system, , neighboring cell search methods, and mobile stations capable of reducing the power consumption or time required by a mobile station to carry out the neighboring cell search, and capable of facilitating the system design and management.

The above objects are solved by the subject-matter of the independent claims. Further preferred embodiments are defined in the dependent claims.

### BRIEF DESCRIPTION OF THE DRAWINGS

Fig. 1 is a schematic diagram illustrating a concept of cells and sectors in a conventional technique;
Fig. 2 is a schematic diagram for explaining a mobile communications system of a first embodiment;
Fig. 3 is a block diagram showing a configuration of a base station to which the first embodiment in accordance with the present invention is applied;
Fig. 4 is a schematic diagram illustrating a mobile communications system of a further example;
Fig. 5 is a table showing mapping patterns used by the further example
Fig. 6 is a block diagram showing a configuration of a base station to which the further example is applied; and
Fig. 7 is a block diagram showing a configuration of a mobile station to which the present invention is applied.

### BEST MODE FOR CARRYING OUT THE INVENTION

The embodiments in accordance with the invention will now be described with reference to the accompanying drawings.

### (FIRST EMBODIMENT)

Fig. 2 is a schematic diagram for explaining a mobile communications system of a first embodiment.

In Fig. 2, attention is concentrated on only three contiguous cells of a plurality of cells constituting the mobile communications system. In Fig. 2, black points each represent a base station 10, and BS1-BS3 designate the names of the base stations. Each cell is divided into six sectors, and each sector is assigned a channel identifier. In Fig. 2, "G" denotes a channel identifier group, and "C" designates a channel identifier number. For example, the sector 1 of the BS1 is attached by "G1, C16", which means that it is assigned the channel identifier with number 16 belonging to group 1. It is assumed in the present embodiment that the channel identifier numbers 1-19 are allotted to group 1 in advance, channel identifier numbers 20-29 to group 2 and channel identifiers 30-39 to group 3, and that all the mobile stations have the grouping information. Any grouping is acceptable as long as it is uniquely determined for the system, and hence it is not limited to the example of the present embodiment. Furthermore, the number of sectors is not limited to six, but any number of sectors is acceptable. The sectors within the same base station are assigned the channel identifiers belonging to the same group. For example, as illustrated in Fig. 2, the sectors 1-6 of the base station BS1 are each assigned one of the channel identifiers 1-19 in the group 1, without being assigned a channel identifier of the other groups. In Fig. 2, the mobile station 20 is assumed to have already captured the sector 5 of BS1 and sector 2 of BS3. The mobile station knows in advance that the channel identifier C18 of the BS1 sector 5 belongs to the group 1. Accordingly, the mobile station can decide that all the sectors in the BS1 are assigned the channel identifiers of the group 1. Likewise, the mobile station can decide that all the sectors in the BS3 are assigned the channel identifiers of the group 3. From geographic positional relationships, it is likely that the mobile station can capture the sectors 4 and 6 of the BS1 and sectors 1 and 3 of the BS3 by the neighboring cell search. Accordingly, prior search of the groups 1 and 3 in the neighboring cell search will make it possible for the mobile station to capture the new sectors efficiently, limiting the number of the groups to be searched in the new sector search. Thus, the number of candidates of the channel identifiers is limited to a small number, reducing the search time sharply.

Since the sectors in the same base station have their antennas at nearly the same locations, the amount of attenuation in the radio wave propagation is approximately equal. Accordingly, when the mobile station captures any one of the sectors, it is highly likely that it can capture other sectors of the same base station. Thus, efficient capturing of new sectors can be implemented by means of prior search for the channel identifiers belonging to the same group as the already-captured channel identifier belongs. This will reduce the neighboring cell search time, increase the selection accuracy of the optimum sectors for carrying out waiting or communication, and reduce power consumption.

Although the channel identifiers of different groups are assigned to the sectors of the contiguous base stations, it is necessary for the mobile communications system such as mobile telephone system which has a large number of sectors to reassign the same channel identifiers to the sectors sufficiently separated apart to avoid interaction. If the same channel identifier is assigned to near sectors, a problem of the interaction such as erroneous identification or detection of the sectors can arise. It is very complicated in the system design and management to assign each channel identifier with paying attention to the reuse intervals. Applying the present invention will facilitate the system design and management because considering the reuse intervals on a sector or channel identifier basis is not required, but on a base station or group basis is enough.

Furthermore, the BS1 sector 5 can notify the mobile station of the channel identifier number of any one of the sectors of the BS3 as the channel identifier information of the BS3. Although it is optional which sector's channel identifier number in the BS3 is to be notified, the most effective way is to select the sector of the BS3 to which the greatest number of the mobile stations in the current sector make handover. Thus, if the greatest number of mobile stations in the sector 5 of the BS1 make the handover to the sector 2 of the BS3, the sector 5 of the BS1 notifies the mobile station of the channel identifier number of the sector 2 of the BS3. Likewise, if the greatest number of mobile stations in the sector 5 of the BS1 make the handover to the sector 3 of the BS2, the sector 5 of the BS1 notifies the mobile station of the channel identifier number of the sector 3 of the BS2. Accordingly, in the present embodiment, the neighboring sector information reported from the sector 5 of the BS1 is the channel identifier numbers C39 and C23. Thus, even when limiting the notified information to only the channel identifier numbers of the sectors to which the greatest number of the mobile stations of the current sector make handover, the mobile station can learn that there are base stations to which the groups 3 and 2 are assigned in its neighborhood by only capturing the information C39 and C23 from the sector 5 of the BS1. Therefore, prior search for the groups 3 and 2 in the neighboring cell search will accelerate the neighboring cell search by quickening the group identification, for example. In this case, it becomes easier for the other sectors to be captured which belong to the same base station as the sector with the channel identifier included in the notified information because they belong to the same group. Besides, it is most effective to notify the channel identifier number of the sector of the contiguous base station, to which the greatest number of mobile stations in the current sector make handover, because this makes it possible for the mobile station to efficiently capture the neighboring sectors with the high receivable probability by prior search for that channel identifier.

Incidentally, in the present embodiment, the channel identifiers of two or more groups can be assigned to the sectors of the same base station. For example, if the number of sectors of the base station is greater than the number of channel identifiers in a group, it is impossible to assign different channel identifiers in the same group to all the sectors of the same base station. In such a case, the base station is divided into a plurality of subsets consisting of sectors in the base station, and each subset is seen as an independent base station. Considering the subsets as the contiguous base stations, application of the present invention is enabled in the same manner.

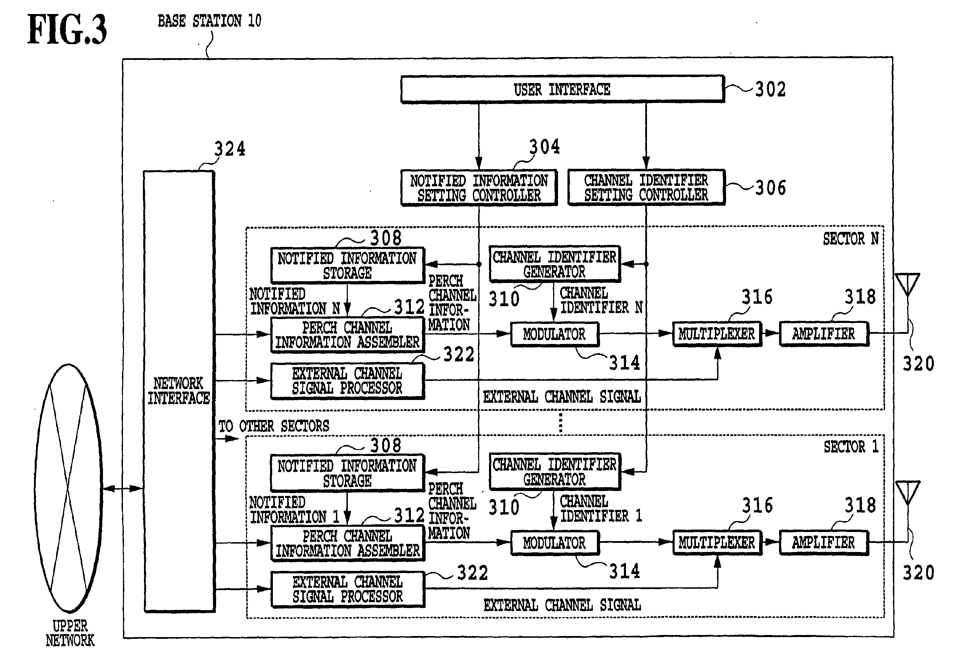

Fig. 3 is a block diagram showing a configuration of a base station to which the first embodiment in accordance with the present invention is applied, which schematically shows a portion of the base station relating to the present invention.

The base station 10 comprises at least a user interface 302, a notified information setting controller 304, a channel identifier setting controller 306, a notified information storage 308, a channel identifier generator 310, a perch channel information assembler 312, a modulator 314, a multiplexer 316, an amplifier 318, an antenna 320, an external channel signal processor 322 and a network interface 324. The user interface 302 is connected to the notified information setting controller 304 and channel identifier setting controller 306 to provide a man-machine interface between an operator and the base station 10. The notified information setting controller 304 is connected to the notified information storage 308 of each sector to provide control for setting the notified information for each sector. Here, "notified information" is the information such as the channel identifiers and group numbers of the neighboring cells associated with the sector, and is sent from the base station to a mobile station visiting the sector according to the method as described in connection with Fig. 2. The channel identifier setting controller 306 is connected to the channel identifier generator 310 of each sector, and provides functions for selecting the channel identifier numbers to be assigned to each sector from the same group, where the channel identifier numbers are set through the user interface 302, and for controlling the channel identifier generators 310. The notified information storage 308 stores notified information which is set by the notified information setting controller 304 for each sector, and transfers the notified information associated with the sector to the perch channel information assembler 312. The channel identifier generator 310 generates the channel identifier for each sector, and transfers it to the modulator 314. The "channel identifier" may be a carrier frequency in a TDMA/FDMA system and a spreading code in a CDMA system. The perch channel information assembler 312 assembles perch channel information from the notified information fed from the notified information storage 308, and transmits it to the modulator 314. The modulator 314 modulates the perch channel information produced by the perch channel information assembler 312 and the channel identifier generated by the channel identifier generator 310. For example, if the channel identifier is a spreading code, it carries out spreading modulation of the perch channel signal using the spreading code, the channel identifier. Alternatively, if the channel identifier is a carrier frequency, it modulates the channel identifier, the carrier frequency, by the perch channel signal. The multiplexer 316 multiplexes the signal modulated by the modulator 314 and an external channel signal processed by the external channel signal processor 322. The amplifier 318 connected to the antenna 320, amplifies the signal. The antenna 320 has a function to emit the signal to the mobile station. The external channel signal processor 322 is connected to the network interface 324 to process the external channel signal and transmit it to the multiplexer 316. The network interface 324 provides interface with a higher level network.

Next, an operation of the base station in the first embodiment with the foregoing configuration will be described.

First, the operator selects the channel identifiers to be assigned to individual sectors from the same group through the user interface 302, and sets them to the sectors.

Subsequently, the channel identifier setting controller 306 notifies the channel identifier generators 310 of the individual sectors of the identifier numbers so that the channel identifier generators 310 generate the channel identifiers with these numbers.

After that, the perch channel information of each sector is characterized by the channel identifier in the modulator 314. The perch channel information includes the notified information such as the channel identifier numbers and group numbers of the neighboring cells, which are set by the notified information setting controller 304 through the user interface 302, and stored in the notified information storage 308 for individual sectors.

Subsequently, the multiplexer 316 multiplexes the modulated signal with the external channel signal, followed by the amplification by the amplifier 318. The amplified signal is transmitted from the antenna 320 to the mobile station.

The present embodiment is configured such that a user sets the channel identifier numbers and group numbers of the neighboring cells to respective sectors or base stations through the user interface 302 as the notified information. However, it is not essential that the user sets the notified information. For example, such a configuration can be implemented as receiving through the network, statistical analysis results about the neighboring sectors to which the greatest number of mobile stations make handover from their primary sector, and automatically setting the channel identifier numbers of the neighboring sectors to the respective sectors as the notified information. Besides, it is not essential that the perch channel information includes the notified information. The notified information can be superimposed on another channel (dedicated communication channel for each user, for example).

### (ADVANGATES OF FIRST EMBODIMENT)

As described above, according to the present invention, assigning the channel identifiers of the same group to the sectors of a particular base station makes it possible for a mobile station, when it captures any one of these sectors, to identify the group of the channel identifiers assigned to the other sectors of the base station to which the current sector belongs, and hence to limit the search of the sectors to that group. This offers an advantage of being able to reduce the time taken by the neighboring cell search, and the power consumption. Furthermore, since the other sectors of the base station to which the already-captured sector belongs are promising candidates for handover considering the geographic positional relation, the efficient capturing of these sectors can improve the accuracy for the mobile station to select the optimum sectors as the waiting or communicating sectors.

In addition, according to the present invention, the complicated process involved in reassigning the same channel identifiers to multiple sectors in the system design and management can be reduced by assigning the channel identifiers of a different group to the sectors of each contiguous base station in the system.

Moreover, according to the present invention, in the mobile communications system in which the channel identifiers of the same group are assigned to the sectors of the same base station, each sector notifies the mobile station of only one channel identifier per neighboring base station. This offers an advantage of being able to reduce the amount of the notified information without impairing the efficiency of the neighboring cell search, thereby reducing the power consumption.

### (FURTHER EXAMPLE)

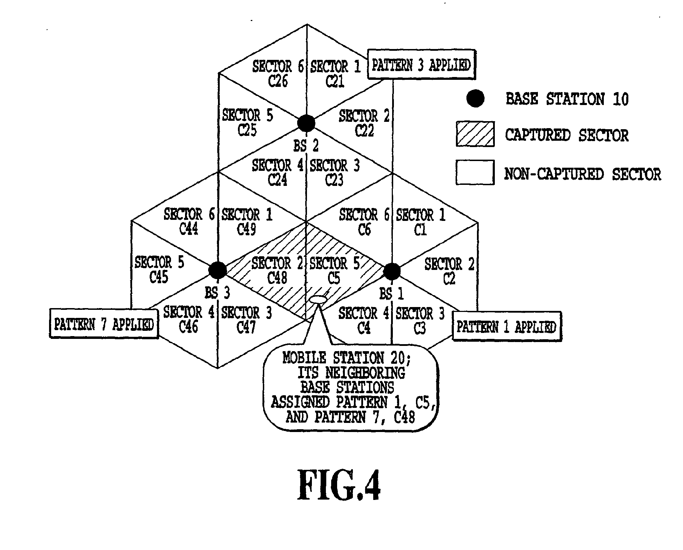

Fig. 4 is a schematic diagram for explaining a mobile communications system of a further example.

In Fig. 4, attention is concentrated on only three contiguous cells of a plurality of cells constituting the mobile communications system. In Fig. 4, black points each represent a base station 10, and BS1-BS3 designate the names of the base stations. Each cell is divided into six sectors, and each sector is assigned a channel identifier. The channel identifier numbers and the sector numbers are mapped in advance according to multiple patterns specified by the system, and all the patterns are known by the mobile stations.

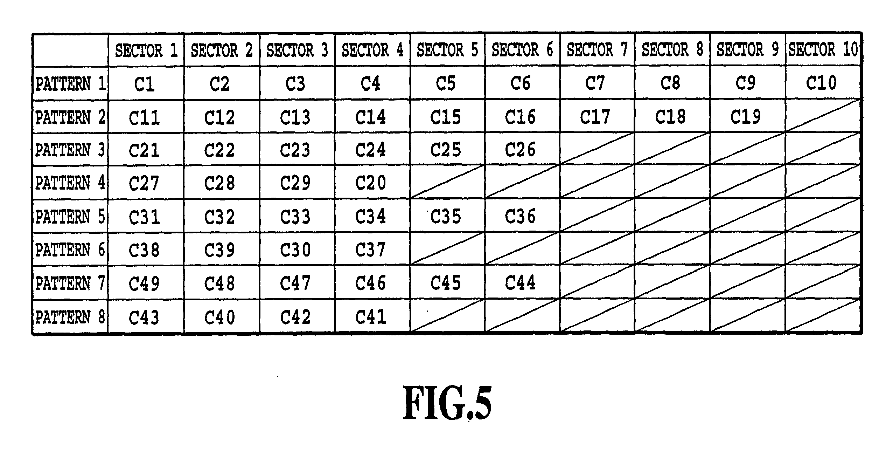

In the present example, it is assumed that the mapping patterns as shown in Fig. 5 are specified. In Figs. 4 and 5, "C" designates a channel identifier number. In Fig. 5, the block "C1", for example, indicates that the channel identifier C1 is assigned to the sector 1 of the base station to which the pattern 1 is applied. The mapping patterns are configured such that the same channel identifier does not occur twice in the patterns so that each channel identifier belongs to only one pattern.

Each base station assigns channel identifiers to its sectors according to any one of the patterns as shown in Fig. 5. Taking an example of Fig. 4, the pattern 1 is applied to the BS1, pattern 3 to the BS2, and pattern 7 to the BS3 so that their channel identifiers are assigned to the sectors within the base stations according to the channel patterns. Although the number of sectors are six in the present embodiment as shown in Fig. 4, this is not essential and any number of sectors are allowed. In addition, the mapping patterns are not limited to those as shown in the table of Fig. 5, and it is obvious to those skilled in the art that any patterns can be acceptable. For example, not only an ascending order as in the patterns 1, 2, 3 and 5 as shown in Fig. 5, but also a descending order as in the pattern 7 is allowable. Besides, a random pattern as the patterns 4, 6 and 8 is acceptable. In the mapping patterns as shown in Fig. 5, the pattern 1 is applicable to the base stations having equal to or less than ten sectors, whereas the pattern 4 to the base stations having equal to or less than four sectors.

Assume here that the mobile station 20 shown in Fig. 4 has captured the sector 5 of the BS1 and the sector 2 of the BS3, that is, the channel identifiers C5 and C48. As described above, since the mobile station knows that the channel identifier C5 belongs to the pattern 1, it can decide that the pattern 1 is applied to the BS1, and likewise that the pattern 7 is applied to the BS3. From the geographic positional relationship, it is likely that the sectors contiguous to the already-captured two sectors can be captured. Accordingly, prior search for the channel identifiers C4 and C6 contiguous to the C5 in the pattern 1, and C49 and C47 contiguous to the C48 in the pattern 7 makes it possible to efficiently capture the new sectors with a high receivable probability, improving the efficiency of the neighboring cell search.

Since the sectors of the same base station have their antennas at nearly the same locations, the amounts of attenuation in the radio wave propagation are approximately equal. Thus, when the mobile station has captured any one of the sectors, it is highly probable that it can capture other sectors of the same base station, particularly sectors contiguous to the already-captured sectors. Therefore, applying the present assigning method will sharply reduce the number of candidates of the channel identifiers in the neighboring cell search. In addition, prior search of other channel identifiers belonging to the same pattern including the already-captured channel identifier makes it possible to efficiently capture the new sectors. Furthermore, prior search of the channel identifiers with the numbers contiguous to the number of the already-captured channel identifier in the circular pattern in that pattern to which the current channel belongs will further increase the efficiency of capturing the new sectors. The term "circular pattern" suggests that when the mobile station has already captured the channel identifier C1 which is assigned to the sector 1 in the pattern 1 of Fig. 5, the prior search is carried out for both the C2 and C10 that are contiguous in the circular pattern. This can reduce the time taken by the neighboring cell search, and increase the accuracy for selecting the optimum sectors as the waiting or communicating sectors, thereby reducing power consumption.

It is necessary for the mobile communications system such as mobile telephone system which has a large number of sectors to assign the same channel identifiers to the sectors sufficiently separated apart to avoid interaction. If the same channel identifier is assigned to near sectors, a problem of the interaction such as erroneous identification or detection of the sectors can arise. It is very complicated in the system design and management to assign each channel identifier with paying attention to the reused intervals. In view of this, in the present example, the channel identifiers can be assigned to sectors of the same base station according to different mapping patterns. Assigning the channel identifiers to the sectors of the contiguous base stations will facilitate the system design and management because considering the reuse intervals on a sector or channel identifier basis is not required, but on a base station or pattern basis is enough.

Furthermore, the sector 5 of the BS1 can notify the mobile station of the channel identifier number of any one of the sectors of the BS3 as the channel identifier information of the BS3. Although it is optional which sector's channel identifier number in the BS3 is to be notified, the most effective way is to select the sector of the BS3 to which the greatest number of the mobile stations in the current sector make handover. Thus, if the greatest number of mobile stations in the sector 5 of the BS1 make the handover to the sector 2 of the BS3, the sector 5 of the BS1 notifies the mobile station of the channel identifier number of the sector 2 of the BS3. Likewise, if the greatest number of mobile stations in the sector 5 of the BS1 make the handover to the sector 3 of the BS2, the sector 5 of the BS1 notifies the mobile station of the channel identifier number of the sector 3 of the BS2. Accordingly, in the present example, the neighboring sector information reported from the sector 5 of the BS1 is the channel identifier numbers C48 and C23. Thus, even when the notified information is limited to only the channel identifier numbers C48 and C23, the mobile station 20 can learn that there are base stations to which the patterns 3 and 7 are assigned in the neighborhood by only capturing the information C48 and C23. Besides, it can estimate the channel identifier numbers used by the sectors of the base stations from the patterns. Thus, a minimum amount of the notified information is enough for the mobile station to learn the channel identifier numbers of the neighboring sectors, without being notified of all the channel identifier numbers of the neighboring sectors. This makes it possible to reduce the amount of the notified information without impairing the accuracy of the neighboring cell search, thereby reducing the power consumption. In this case, the channel identifier number of any sector of the neighboring base station enables the mobile station to identify the pattern, offering sufficient advantages. However, as described before, it is most effective to notify the channel identifier number of the sector of the contiguous base station, to which the greatest number of mobile stations make handover, because this enables the mobile station to efficiently capture the perch channel of the neighboring sectors with the high receivable probability by prior search for that channel identifier.

Although the channel identifier number is used as the notified information in the present example, a similar advantage can be achieved by notifying the pattern number of the neighboring base station. Specifically, each sector notifies the mobile station of the pattern numbers assigned to the neighboring base stations so that the mobile station can carry out the neighboring cell search according to the notified information. It is enough for the mobile station to make prior search of the channel identifiers belonging to the notified pattern. This will increase the probability of capturing the new sectors efficiently, thereby reducing the time taken by the neighboring cell search and the power consumption.

The present example is characterized in that it selects one of mapping patterns for each base station, and assigns the channel identifiers of the selected mapping pattern. Here, if the number of sectors of the base station is greater than the number of channel identifiers constituting the pattern, it is impossible to assign different channel identifiers in the same pattern to all the sectors of the same base station. In such a case, the base station is divided into a plurality of subsets consisting of the sectors in the base station, and each subset is seen as an independent base station. Considering the subsets as the contiguous base stations, the present example becomes applicable in the same manner.

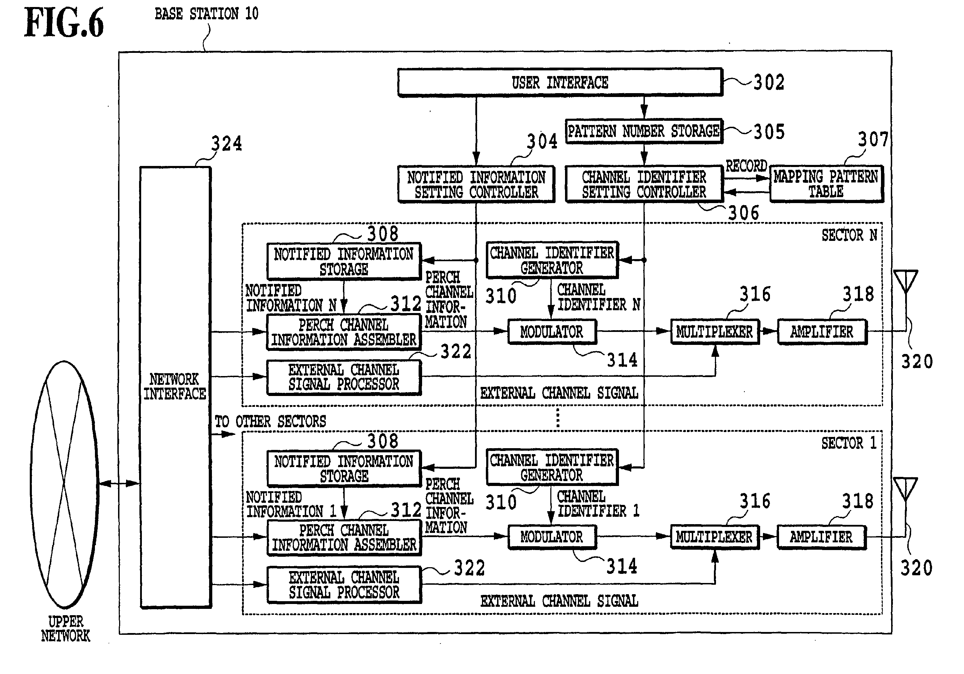

Fig. 6 is a block diagram showing a configuration of a base station to which the present example is applied, which schematically shows a portion of the base station.

The base station 10 comprises at least a user interface 302, a notified information setting controller 304, a pattern number storage 305, a channel identifier setting controller 306, a mapping pattern table 307, a notified information storage 308, a channel identifier generator 310, a perch channel information assembler 312, a modulator 314, a multiplexer 316, an amplifier 318, an antenna 320, an external channel signal processor 322 and a network interface 324. The pattern number storage 305 is connected between the user interface 302 and the channel identifier setting controller 306, and stores the pattern numbers input by a user through the user interface 302. The mapping pattern table 307 is a table for storing the mapping patterns as shown in Fig. 5, for example. As for the remaining portion, the same reference numerals designate the corresponding components having the same functions as in Figs. 6 and 5, and the description thereof is omitted here.

Next, the operation of the base station in the present example thus configured will be described.

First, the operator sets the mapping pattern number to be assigned to the current base station through the user interface 302 so that it is stored in the pattern number storage 305.

Subsequently, the channel identifier setting controller 306 retrieves the channel identifiers to be assigned to the sectors by looking up the mapping pattern table 307, and notifies the channel identifier generators 310 in the individual sectors of the channel identifier numbers.

After that, each channel identifier generator 310 generates the channel identifier corresponding to the number.

Subsequently, the perch channel information of the sector is characterized by the channel identifier by the modulator 314.

Then, the multiplexer 316 multiplexes the output of the modulator 314 and the external channel signal, followed by the amplification by the amplifier 318. The amplified signal is transmitted from the antenna 320 to the mobile station.

As for the notified information in Fig. 6, the user assigns the channel identifier numbers or pattern numbers of the neighboring cells to respective sectors or base stations through the user interface 302. However, it is not essential that the user sets the notified information. For example, such a configuration can be implemented as receiving through the network, statistical analysis results about the neighboring sectors to which the greatest number of mobile stations make handover from their primary sector, and automatically setting the channel identifier numbers of the neighboring sectors to the respective sectors as the notified information. Besides, it is not essential that the perch channel information includes the notified information. The notified information can be superimposed on another channel (dedicated communication channel for each user, for example).

### (ADVANGATES OF THE EXAMPLE)

As described above, the example specifies a plurality of mapping patterns about the sector numbers and channel identifier numbers in the system, and assigns the channel identifiers of any one of the patterns to each base station. This makes it possible for a mobile station to identify the channel identifiers assigned to the other sectors of the base station to which the current sector belongs by looking up the mapping pattern known to the mobile station, thereby limiting the number of channel identifiers when the mobile station searches these sectors. This offers an advantage of being able to reduce the time taken by the neighboring cell search, and the power consumption. Furthermore, since the other sectors of the base station to which the already-captured sector belongs are promising candidates for handover considering the geographic positional relation, the efficient capturing of these sectors can improve the accuracy for the mobile station to select the optimum sectors as the waiting or communicating sectors.

In addition, since the example assigns different patterns to the contiguous base stations in the system, it can reduce the complicated process involved in reassigning the same channel identifiers to two or more sectors in the system design and management.

Moreover, according to the example, each sector notifies the mobile station of only one channel identifier per neighboring base station, or of the mapping pattern of the channel identifiers used by the neighboring base station. This offers an advantage of being able to reduce the amount of the notified information without impairing the efficiency of the neighboring cell search, thereby reducing the power consumption.

### (CONFIGURATION OF MOBILE STATION)

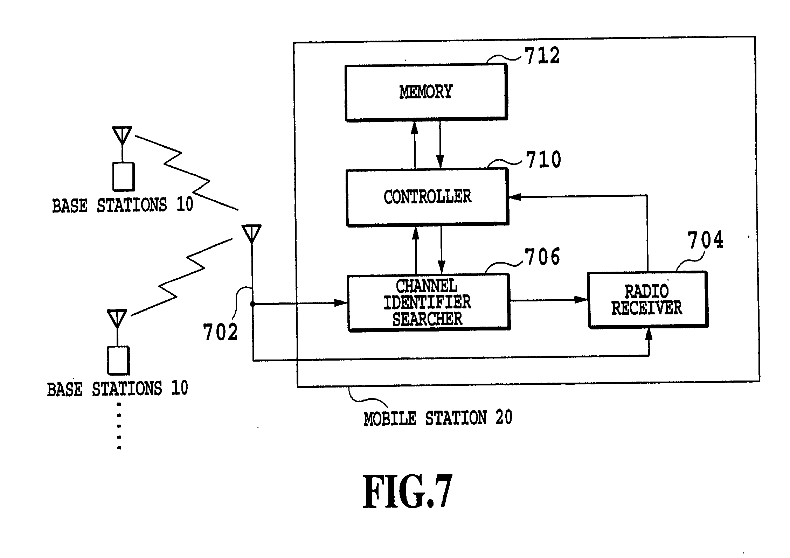

A mobile station employed in the embodiments in accordance with the present invention will now be described in detail with reference to Fig. 7.

Fig. 7 is a block diagram showing a configuration of a mobile station of the mobile communications system in the embodiments in accordance with the present invention, in which portions of the mobile station relevant to the present invention is shown schematically.

The mobile station 20 comprises at least an antenna 702, a channel identifier searcher 706, a radio receiver 704, a controller 710 and a memory 712. The antenna 702, connected to the channel identifier searcher 706 and radio receiver 704, receives radio waves from base stations 10. The channel identifier searcher 706, connected to the antenna 702, controller 710 and radio receiver 704, searches for a channel identifier in the signals received through the antenna 702, and notifies the controller 710 and radio receiver 704 of the captured channel identifier. Using the channel identifier notified, the radio receiver 704 decodes from the signal received through the antenna 702 the notified information sent from the sector using channel identifier. The radio receiver 704 then notifies the controller 710 of the decoded channel identifier, group, and the like of the neighboring sector. The controller 710, connected to the channel identifier searcher 706, radio receiver 704 and memory 712, records the captured channel identifier, neighboring sectors' channel identifiers and the like to the memory 712, selects the next channel identifier to be searched for, and controls the channel identifier searcher 706 to carry out the prior search of the channel identifier. The memory 712, connected to the controller 710, stores the already-captured channel identifier, the neighboring sectors' channel identifiers obtained from the notified information sent from the base stations 10, and groups of the channel identifiers.

Next, the operation of the mobile station 20 with the foregoing configuration will be described.

First, as soon as the channel identifier searcher 706 captures a new channel identifier from the received signal, the controller 710 records the channel identifier of that sector to the memory 712 as the already-captured channel identifier.

Subsequently, the channel identifier searcher 706 notifies the radio receiver 704 of the channel identifier of the sector.

Then, using the channel identifier captured by the channel identifier searcher 706, the radio receiver 704 decodes from the signal received via the antenna 702, the notified information from the sector, and notifies the controller 710 of its result.

Subsequently, the controller 710 records the notified information, that is, the neighboring sector's channel identifier, its group and the like to the memory 712.

Then, using the channel identifier fed from the channel identifier searcher 706 and the neighboring sector's channel identifier fed from the radio receiver 704 as decision resources, the controller 710 selects in advance the channel identifier that is likely to be captured in the future. In this case, although either the channel identifier received from the channel identifier searcher 706 or the channel identifier from the radio receiver 704 can be given priority in making the decision, the channel identifier delivered from the channel identifier searcher 706 can be given priority so that it is selected first as the channel identifier that is likely to be captured in the future by retrieving its channel identifier group from the memory 712, with giving the second priority to the channel identifier from the radio receiver 704.

Then, the controller 710 controls the channel identifier searcher 706 such that it searches for the channel identifier that is highly likely to be captured in the future in preference to the other. This makes it possible for the mobile station 20 to carry out the neighboring cell search for a limited group or the like, and hence offers an advantage of being able to reduce the time taken by the neighboring cell search, and power consumption. Furthermore, since the other sectors of the base station 10 to which the already-captured sector belongs are promising candidates for handover considering the geographic positional relation, the efficient capturing of these sectors can improve the accuracy for the mobile station 20 to always select the optimum sectors as the waiting or communicating sectors.

## Claims

1. A mobile station (20) configured to communicate with a plurality of base stations (10) and configured to decide sectors in which said mobile station waits for communication or with which said mobile station communicates, said mobile station (20) **characterized by** comprising:
means (712) for recording groups of channel identifiers, each channel identifier corresponding to a sector, each group corresponding to sectors within a single base station (10);
means (702, 704) for receiving notification of a channel identifier of a sector from a base station (10); and
means (706) for searching for other channel identifiers in a group to which the channel identifier notified in the notification received by said receiving means belongs, prior to searching for channel identifiers in the other groups.

2. A mobile station (20) configured to communicate with a plurality of base stations (10) and configured to decide sectors in which said mobile station waits for communication or with which said mobile station communicates, said mobile station (20) **characterised by** comprising:
means (712) for recording groups of channel identifiers, each channel identifier corresponding to a sector, each group corresponding to sectors within a single base station (10); and
means (706) for searching for other channel identifiers in a group to which the channel identifier of a sector already-captured by the mobile station belongs, prior to searching for channel identifiers in the other groups.

3. The mobile station as claimed in claim 1 or 2, wherein the channel identifier consists of a spreading code or a carrier frequency.

4. The mobile station as claimed in claim 1, 2 or 3, wherein the channel identifier is included in a perch channel signal.

5. A method of searching for a neighbouring cell utilizing information sent from sectors to a mobile station (20) in a mobile communications system, the mobile station configured to communicate with a plurality of base stations and configured to decide a sector in which the mobile station waits for communication or with which the mobile station communicates, said method **characterized by** comprising the steps of:
assigning channel identifiers to sectors in such a manner that the channel identifiers are grouped so that channel identifiers belonging to each group correspond to sectors within a single base station (10);
sending from a base station (10) to a visiting mobile station (20) a notification of a channel identifier of a sector which belongs to the neighbouring base station (10) and to which the greatest number of the mobile stations (20) make handover from a current sector; and
searching at the mobile station (20) for other channel identifiers in a group to which the channel identifier notified in the notification belongs, prior to searching for channel identifiers in the other groups.

6. A method of searching for a neighbouring cell in a mobile communications system comprising a mobile station (20) configured to communicate with a plurality of base stations and configured to decide a sector in which the mobile station waits for communication or with which the mobile station communicates, said method **characterized by** comprising the steps of:
assigning channel identifiers to sectors in such a manner that the channel identifiers are grouped so that channel identifiers belonging to each group correspond to sectors within a single base station (10); and
searching at the mobile station (20) for other channel identifiers in a group to which the channel identifier of a sector already-captured by the mobile station belongs, prior to searching for channel identifiers in the other groups.

7. The method of searching for a neighbouring cell as claimed in claim 5 or 6, wherein the channel identifier consists of a spreading code or a carrier frequency.

8. The method of searching for a neighbouring cell as claimed in claim 5, 6 or 7, wherein the channel identifier is included in a perch channel signal.

9. A mobile communications system allowing the mobile station (20) communicating with a plurality of base stations (10), the mobile station configured to decide a sector in which the mobile station waits for communication or with which the mobile station communicates, said mobile communications system **characterized by** comprising:
means (306) for assigning channel identifiers to sectors in such a manner that the channel identifiers are grouped so that channel identifiers belonging to each group correspond to the sectors within a single base station (10); and
means (706) for searching at the mobile station (20) for other channel identifiers in a group to which the channel identifier of a sector already-captured by the mobile station belongs, prior to searching for channel identifiers in the other groups.

10. The mobile communications system as claimed in claim 9, wherein the channel identifier consists of a spreading code or a carrier frequency.

11. The mobile communications system as claimed in claim 9 or 10, wherein the channel identifier is included in a perch channel signal.

## Patentansprüche

1. Mobilstation (20), welche dafür konfiguriert ist, mit mehreren Basisstationen (10) zu kommunizieren, und dafür konfiguriert ist, Sektoren auszuwählen, in welchen die Mobilstation auf eine Kommunikation wartet oder mit welchen die Mobilstation kommuniziert, wobei die Mobilstation (20) **dadurch gekennzeichnet ist, dass** sie das Folgende umfasst:
ein Mittel (712) zum Aufzeichnen von Gruppen von Kanalkennungen, wobei jede Kanalkennung einem Sektor entspricht, wobei jede Gruppe Sektoren innerhalb einer einzelnen Basisstation (10) entspricht;
ein Mittel (702, 704) zum Empfangen der Meldung einer Kanalkennung eines Sektors von einer Basisstation (10) und
ein Mittel (706) zum Suchen nach anderen Kanalkennungen in einer Gruppe, zu welcher die Kanalkennung gehört, die in der Meldung gemeldet wird, die von dem Empfangsmittel empfangen wird, vor dem Suchen nach Kanalkennungen in den anderen Gruppen.

2. Mobilstation (20), welche dafür konfiguriert ist, mit mehreren Basisstationen (10) zu kommunizieren, und dafür konfiguriert ist, Sektoren auszuwählen, in welchen die Mobilstation auf eine Kommunikation wartet oder mit welchen die Mobilstation kommuniziert, wobei die Mobilstation (20) **dadurch gekennzeichnet ist, dass** sie das Folgende umfasst:
ein Mittel (712) zum Aufzeichnen von Gruppen von Kanalkennungen, wobei jede Kanalkennung einem Sektor entspricht, wobei jede Gruppe Sektoren innerhalb einer einzelnen Basisstation (10) entspricht; und
ein Mittel (706) zum Suchen nach anderen Kanalkennungen in einer Gruppe, zu welcher die Kanalkennung eines Sektors gehört, der bereits von der Mobilstation erfasst ist, vor dem Suchen nach Kanalkennungen in den anderen Gruppen.

3. Mobilstation nach Anspruch 1 oder 2, wobei die Kanalkennung aus einem Spreizcode oder einer Trägerfrequenz besteht.

4. Mobilstation nach Anspruch 1, 2 oder 3, wobei die Kanalkennung in einem Perch-Kanal-Signal enthalten ist.

5. Verfahren zum Suchen nach einer Nachbarzelle unter Verwendung von Informationen, die von Sektoren an eine Mobilstation (20) in einem Mobilkommunikationssystem gesendet werden, wobei die Mobilstation dafür konfiguriert ist, mit mehreren Basisstationen zu kommunizieren, und dafür konfiguriert ist, einen Sektor auszuwählen, in welchem die Mobilstation auf eine Kommunikation wartet oder mit welchem die Mobilstation kommuniziert, wobei das Verfahren **dadurch gekennzeichnet ist, dass** es die folgenden Schritte umfasst:
Zuordnen von Kanalkennungen zu Sektoren, derart, dass die Kanalkennungen so gruppiert werden, dass Kanalkennungen, die zu einer jeweiligen Gruppe gehören, Sektoren innerhalb einer einzelnen Basisstation (10) entsprechen;
Senden einer Meldung einer Kanalkennung eines Sektors, welcher zu der benachbarten Basisstation (10) gehört und an welchen die größte Zahl der Mobilstationen (20) von einem aktuellen Sektor übergibt, von einer Basisstation (10) an eine besuchende Mobilstation (20) und
Suchen an der Mobilstation (20) nach anderen Kanalkennungen in einer Gruppe, zu welcher die Kanalkennung gehört, die in der Meldung gemeldet wird, vor dem Suchen nach Kanalkennungen in den anderen Gruppen.

6. Verfahren zum Suchen nach einer Nachbarzelle in einem Mobilkommunikationssystem, welches eine Mobilstation (20) umfasst, die dafür konfiguriert ist, mit mehreren Basisstationen zu kommunizieren, und dafür konfiguriert ist, einen Sektor auszuwählen, in welchem die Mobilstation auf eine Kommunikation wartet oder mit welchem die Mobilstation kommuniziert, wobei das Verfahren **dadurch gekennzeichnet ist, dass** es die folgenden Schritte umfasst:
Zuordnen von Kanalkennungen zu Sektoren, derart, dass die Kanalkennungen so gruppiert werden, dass Kanalkennungen, die zu einer jeweiligen Gruppe gehören, Sektoren innerhalb einer einzelnen Basisstation (10) entsprechen; und
Suchen an der Mobilstation (20) nach anderen Kanalkennungen in einer Gruppe, zu welcher die Kanalkennung eines Sektors gehört, der bereits von der Mobilstation erfasst ist, vor dem Suchen nach Kanalkennungen in den anderen Gruppen.

7. Verfahren zum Suchen nach einer Nachbarzelle nach Anspruch 5 oder 6, wobei die Kanalkennung aus einem Spreizcode oder einer Trägerfrequenz besteht.

8. Verfahren zum Suchen nach einer Nachbarzelle nach Anspruch 5, 6 oder 7, wobei die Kanalkennung in einem Perch-Kanal-Signal enthalten ist.

9. Mobilkommunikationssystem, welches ermöglicht, dass die Mobilstation (20) mit mehreren Basisstationen (10) kommuniziert, wobei die Mobilstation dafür konfiguriert ist, einen Sektor auszuwählen, in welchem die Mobilstation auf eine Kommunikation wartet oder mit welchem die Mobilstation kommuniziert, wobei das Mobilkommunikationssystem **dadurch gekennzeichnet ist, dass** es das Folgende umfasst:
ein Mittel (306) zum Zuordnen von Kanalkennungen zu Sektoren, derart, dass die Kanalkennungen so gruppiert werden, dass Kanalkennungen, die zu einer jeweiligen Gruppe gehören, Sektoren innerhalb einer einzelnen Basisstation (10) entsprechen; und
ein Mittel (706) zum Suchen an der Mobilstation (20) nach anderen Kanalkennungen in einer Gruppe, zu welcher die Kanalkennung eines Sektors gehört, der bereits von der Mobilstation erfasst ist, vor dem Suchen nach Kanalkennungen in den anderen Gruppen.

10. Mobilkommunikationssystem nach Anspruch 9, wobei die Kanalkennung aus einem Spreizcode oder einer Trägerfrequenz besteht.

11. Mobilkommunikationssystem nach Anspruch 9 oder 10, wobei die Kanalkennung in einem Perch-Kanal-Signal enthalten ist.

## Revendications

1. Station mobile (20) configurée pour communiquer avec une pluralité de stations de base (10) et configurée pour décider de secteurs dans lesquels ladite station mobile attend une communication ou avec lesquels ladite station mobile communique, ladite station mobile (20) étant **caractérisée en ce qu'**elle comprend :
un moyen (712) pour enregistrer des groupes d'identificateurs de canal, chaque identificateur de canal correspondant à un secteur, chaque groupe correspondant à des secteurs dans une seule station de base (10) ;
un moyen (702, 704) pour recevoir une notification d'un identificateur de canal d'un secteur en provenance d'une station de base (10) ; et
un moyen (706) pour rechercher d'autres identificateurs de canal dans un groupe auquel appartient l'identificateur de canal notifié dans la notification reçue par ledit moyen de réception, avant de rechercher des identificateurs de canal dans les autres groupes.

2. Station mobile (20) configurée pour communiquer avec une pluralité de stations de base (10) et configurée pour décider de secteurs dans lesquels ladite station mobile attend une communication ou avec lesquels ladite station mobile communique, ladite station mobile (20) étant **caractérisée en ce qu'**elle comprend :
un moyen (712) pour enregistrer des groupes d'identificateurs de canal, chaque identificateur de canal correspondant à un secteur, chaque groupe correspondant à des secteurs dans une seule station de base (10) ; et
un moyen (706) pour rechercher d'autres identificateurs de canal dans un groupe auquel appartient l'identificateur de canal d'un secteur déjà capturé par la station mobile, avant de rechercher des identificateurs de canal dans les autres groupes.

3. Station mobile selon la revendication 1 ou 2, dans laquelle l'identificateur de canal consiste en un code d'étalement ou une fréquence porteuse.

4. Station mobile selon la revendication 1, 2 ou 3, dans laquelle l'identificateur de canal est inclus dans un signal de canal de perche.

5. Procédé de recherche d'une cellule voisine en utilisant des informations envoyées depuis des secteurs vers une station mobile (20) dans un système de communications mobile, la station mobile étant configurée pour communiquer avec une pluralité de stations de base et configurée pour décider d'un secteur dans lequel la station mobile attend une communication ou avec lequel la station mobile communique, ledit procédé étant **caractérisé en ce qu'**il comprend les étapes de :
attribution d'identificateurs de canal à des secteurs de telle sorte que les identificateurs de canal soient groupés de sorte que des identificateurs de canal appartenant à chaque groupe correspondent à des secteurs dans une seule station de base (10) ;
envoi depuis une station de base (10) à une station mobile de passage (20) d'une notification d'un identificateur de canal d'un secteur qui appartient à la station de base voisine (10) et vers lequel le plus grand nombre des stations mobiles (20) effectuent un transfert intercellulaire à partir d'un secteur courant ; et
recherche au niveau de la station mobile (20) d'autres identificateurs de canal dans un groupe auquel appartient l'identificateur de canal notifié dans la notification, avant de rechercher des identificateurs de canal dans les autres groupes.

6. Procédé de recherche d'une cellule voisine dans un système de communications mobile comprenant une station mobile (20) configurée pour communiquer avec une pluralité de stations de base et configurée pour décider d'un secteur dans lequel la station mobile attend une communication ou avec lequel la station mobile communique, ledit procédé étant **caractérisé en ce qu'**il comprend les étapes de :
attribution d'identificateurs de canal à des secteurs de telle sorte que les identificateurs de canal soient groupés de sorte que des identificateurs de canal appartenant à chaque groupe correspondent à des secteurs dans une seule station de base (10) ; et
recherche au niveau de la station mobile (20) d'autres identificateurs de canal dans un groupe auquel appartient l'identificateur de canal d'un secteur déjà capturé par la station mobile, avant de rechercher des identificateurs de canal dans les autres groupes.

7. Procédé de recherche d'une cellule voisine selon la revendication 5 ou 6, dans lequel l'identificateur de canal consiste en un code d'étalement ou une fréquence porteuse.

8. Procédé de recherche d'une cellule voisine selon la revendication 5, 6 ou 7, dans lequel l'identificateur de canal est inclus dans un signal de canal de perche.

9. Système de communications mobile permettant à la station mobile (20) de communiquer avec une pluralité de stations de base (10), la station mobile étant configurée pour décider d'un secteur dans lequel la station mobile attend une communication ou avec lequel la station mobile communique, ledit système de communications mobile étant **caractérisé en ce qu'**il comprend :
un moyen (306) pour attribuer des identificateurs de canal à des secteurs de telle sorte que les identificateurs de canal soient groupés de sorte que des identificateurs de canal appartenant à chaque groupe correspondent aux secteurs dans une seule station de base (10) ; et
un moyen (706) pour rechercher au niveau de la station mobile (20) d'autres identificateurs de canal dans un groupe auquel appartient l'identificateur de canal d'un secteur déjà capturé par la station mobile, avant de rechercher des identificateurs de canal dans les autres groupes.

10. Système de communications mobile selon la revendication 9, dans lequel l'identificateur de canal consiste en un code d'étalement ou une fréquence porteuse.

11. Système de communications mobile selon la revendication 9 ou 10, dans lequel l'identificateur de canal est inclus dans un signal de canal de perche.
